# EUROPEAN PATENT APPLICATION

(11) **EP 4 804 284 A1**
(43) Date of publication of application: **09.09.2026**
(21) Application number: 24885840.9
(22) Date of filing: 31.10.2024
(51) Int. Cl.: H01M 10/0587, H01G 11/70, H01M 10/04, H01M 50/533, H01M 50/536

(54) **POWER STORAGE DEVICE**

(30) Priority: 31.10.2023 JP 2023187182
(71) Applicant: Panasonic Intellectual Property Management Co., Ltd., Kadoma-shi, Osaka 571-0057 (JP)
(72) Inventor: KATO Yudai, Kadoma-shi, Osaka 571-0057 (JP); GESHI Shinya, Kadoma-shi, Osaka 571-0057 (JP); SAKAMOTO Shinichi, Kadoma-shi, Osaka 571-0057 (JP); KOZUKI Kiyomi, Kadoma-shi, Osaka 571-0057 (JP)
(74) Representative: Eisenführ Speiser
(86) International application number: PCT/JP2024/038926
(87) International publication number: WO 2025/095073

(57) **Abstract**

In the present invention, a cylindrical battery (10) comprises: an electrode body (14) in which a positive electrode (11) and a negative electrode (12) are disposed with a separator (13) interposed therebetween; and an outer can (16) that accommodates the electrode body (14). The negative electrode (12) has a first end constituting a lower end section and a second end constituting an upper end section in the axial direction (negative electrode width direction) which is a first direction. In the negative electrode (12), a current is collected from the first end side, and one or more notches (46) are provided at the second end. The electrode body (14) may be a wound electrode body in which the strip-shaped positive electrode (11) and the strip-shaped negative electrode (12) are wound with the separator (13) interposed therebetween.

## Description

### TECHNICAL FIELD

The present disclosure relates to a power storage device and, for example, to a battery and a capacitor.

### BACKGROUND ART

Conventionally, power storage devices include a cylindrical secondary battery described in Patent Literature 1. The cylindrical secondary battery comprises: an electrode assembly that includes a positive electrode and a negative electrode that are wound with a separator interposed therebetween; a closed-bottom-cylindrical-shaped housing can that accommodates the electrode assembly; and a sealing assembly that blocks an opening portion of the housing can. The positive electrode of the electrode assembly is electrically coupled to a bottom surface of the sealing assembly via a positive electrode lead. The negative electrode of the electrode assembly is electrically coupled to the bottom of the housing can via a negative electrode lead.

### CITATION LIST

### PATENT LITERATURE

Patent Literature 1: Japanese Unexamined Patent Application Publication No. 2000-048825

### SUMMARY

To further improve the capacity and output of the power storage device, and perform stable charging and discharging in a more severe environment, the reliability is required to be further improved. The present disclosure has an object to provide a highly reliable power storage device.

To solve the problem described above, a power storage device according to the present disclosure comprises: an electrode assembly that includes a first electrode and a second electrode, and a separator interposed therebetween; and an housing body that accommodates the electrode assembly, wherein the first electrode includes a first end and a second end in a first direction, and the first electrode allows current to be collected from a side of the first end, and includes one or more notches at the second end.

The present disclosure may realize a highly safe and reliable power storage device.

### BRIEF DESCRIPTION OF DRAWING

FIG. 1 is a sectional view of a cylindrical battery in an axial direction according to one embodiment in the present disclosure.
FIG. 2 is a perspective view illustrating the structure of an electrode assembly.
FIG. 3(a) is a schematic plan view when a positive electrode is developed in a strip shape, and FIG. 3(b) is a schematic plan view when a negative electrode is developed in a strip shape.
FIG. 4 is a schematic plan view of a negative electrode in a reference example corresponding to FIG. 3(b).
FIG. 5 is a schematic plan view of a negative electrode in a first modified example corresponding to FIG. 3(b).
FIG. 6 is a schematic plan view of a negative electrode in a second modified example corresponding to FIG. 3(b).

### DESCRIPTION OF EMBODIMENTS

Referring to the drawings, embodiments of a power storage device according to the present disclosure are described in detail below. The power storage device in the present disclosure may be a secondary battery that includes an aqueous electrolyte, or a secondary battery that includes a non-aqueous electrolyte. The power storage device in the present disclosure may be a cylindrical battery that comprises a cylindrical (for example, closed-bottom cylindrical) housing can, a rectangular battery that comprises a rectangular housing can, or a pouch-shaped battery that comprises a housing body made of a laminated sheet. In such batteries, the cylindrical housing can, the rectangular housing can, and the laminated sheet constitute the housing bodies. Alternatively, the power storage device in the present disclosure may be a capacitor that is repeatedly charged and discharged. In the following description, an example of a cylindrical secondary battery (lithium-ion battery) that includes a non-aqueous electrolyte is described as a power storage device as one embodiment. However, the power storage device in the present disclosure is not limited to this.

In cases where the following description includes a plurality of embodiments and modified examples, it is anticipated from the outset that a new embodiment is constructed by combining their characteristic portions as appropriate. In the following description, the same components are assigned the same symbols in the drawings, and redundant description is omitted. These drawings include schematic diagrams. The dimensional proportions, such as of longitudinal, lateral, and height, of the corresponding components between different drawings do not necessarily match. In the present description, a side of a sealing assembly 17 in the axial direction (height direction) of a cylindrical battery 10 is assumed as "upper" side, and a side of a bottom plate portion 68 of a housing can 16 in the axial direction is assumed as "lower" side. The axial direction of the cylindrical battery 10 matches the electrode assembly height direction. Among the configuration elements described below, configuration elements that are not described in an independent claim indicating the highest-level concept are optional configuration elements, and are not necessary configuration elements.

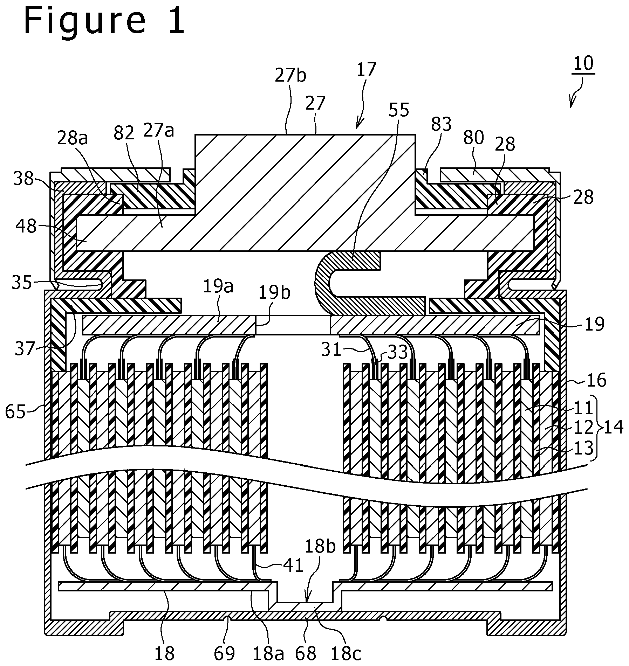

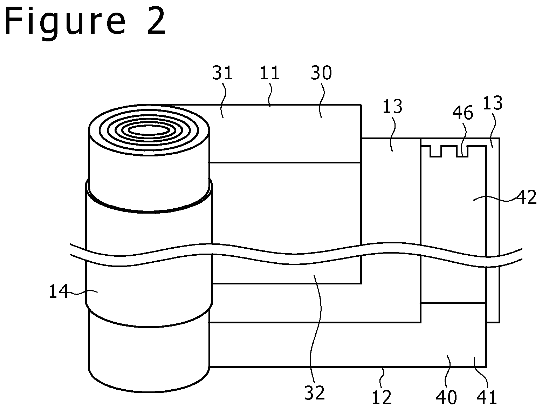

FIG. 1 is a sectional view of the battery 10 in the axial direction according to one embodiment in the present disclosure. FIG. 2 is a perspective view illustrating the structure of an electrode assembly 14. As shown in FIG. 1, the battery 10 comprises: a coiled electrode assembly 14; a non-aqueous electrolyte (not shown); a closed-bottom-cylindrical-shaped housing can 16 that is made of metal, and stores the electrode assembly 14 and the non-aqueous electrolyte; and a sealing assembly 17.

As shown in FIG. 2, the electrode assembly 14 has a coiled structure where a strip-shaped positive electrode 11 and a strip-shaped negative electrode 12 are wound with two strip-shaped separators 13 each interposed therebetween. The negative electrode 12 constitutes a first electrode, and the positive electrode constitutes the second electrode. As shown in FIG. 2, the positive electrode 11 protrudes upward more than the negative electrode 12 and the separators 13, and the negative electrode 12 protrudes downward more than the positive electrode 11 and the separators 13. The positive electrode 11 includes a third exposed portion 31 where a second mixture layer (positive electrode mixture layer) 32 is not provided (not formed) on a second core (positive electrode core) 30, on an upper end portion (a fourth end of the positive electrode) in the axial direction (first direction), from the starting end to the terminating end of the strip-shaped positive electrode 11 in the winding direction. The upper end portion constitutes a second end of the negative electrode 12 and the fourth end of the positive electrode 11 in the axial direction. The negative electrode 12 includes a first exposed portion 41 where a first mixture layer (negative electrode mixture layer) 42 is not provided on a first core (negative electrode core) 40, on a lower end portion (first end of the negative electrode) in the axial direction, from the starting end to the terminating end of the strip-shaped negative electrode 12 in the winding direction.

The upper end portion (fourth end of the positive electrode) of the electrode assembly 14 in the axial direction is made up of the third exposed portion 31. The lower end portion (first end of the negative electrode) of the electrode assembly 14 in the axial direction is made up of the first exposed portion 41. To prevent lithium from being deposited, the first mixture layer 42 is formed in a dimension one size larger than the second mixture layer 32. That is, the first mixture layer 42 is formed longer in a first longitudinal direction and the width direction than the second mixture layer 32.

The non-aqueous electrolyte has ionic conductivity (e.g., lithium ion conductivity). The non-aqueous electrolyte may be a liquid electrolyte (electrolytic solution) or a solid electrolyte. The liquid electrolyte (electrolytic solution) contains a non-aqueous solvent and an electrolyte salt dissolved in the non-aqueous solvent. For example, any of esters, ethers, nitriles, amides, and a mixed solvent that contains two or more of them is used as the non-aqueous solvent. Examples of the non-aqueous solvent include ethylene carbonate (EC), ethyl methyl carbonate (EMC), dimethyl carbonate (DMC), and diethyl carbonate (DEC), and a mixed solvent thereof. The non-aqueous solvent may contain a halogen-substituted product (e.g., fluoroethylene carbonate) that is any of these solvents with at least some of their hydrogens being substituted with halogen atoms such as fluorine. For example, a lithium salt such as LiPF₆ is used as the electrolyte salt.

For example, a solid or gelatinous polymer electrolyte, or inorganic solid electrolyte is used as the solid electrolyte. The polymer electrolyte contains, for example, a lithium salt and a matrix polymer, or a non-aqueous solvent, a lithium salt, and a matrix polymer. For example, a polymer material that absorbs the non-aqueous solvent and causes it to gel is used as the matrix polymer. For example, a fluorine resin, an acrylic resin, or a polyether resin is used as the polymer material. For example, a material (e.g., an oxide-based solid electrolyte, a sulfide-based solid electrolyte, or a halogen-based solid electrolyte) publicly known in an all-solid-state lithium ion secondary battery and the like is used as the inorganic solid electrolyte.

The positive electrode 11 includes the second core 30, and the second mixture layers 32 formed on the opposite surfaces of the second core 30. The second core 30 may be made of metal foil that is stable in the potential range of the positive electrode 11, such as aluminum or an aluminum alloy, a film on which the metal is disposed as a surface layer, or the like. The second mixture layer 32 contains a positive-electrode active material, a conductive agent, and a binding agent. The positive electrode 11 can be fabricated by forming the second mixture layers 32 on the opposite surfaces of the second core 30 through, for example, applying a positive electrode mixture slurry that contains the positive-electrode active material, the conductive agent, the binding agent, and the like on the second core 30, drying the applied films, and then compressing them. Note that the second mixture layer 32 may be formed only on one surface of the second core 30. The second mixture layers 32 may be made by pasting sheets each formed in a layer to the second core. In such pasting, a conductive adhesive that contains conductive particles may be interposed between the second mixture layers 32 and the second core 30.

The positive-electrode active material has a configuration that contains a lithium-containing metal composite oxide as a principal component. The metal element contained in the lithium-containing metal composite oxide is Ni, Co, Mn, Al, B, Mg, Ti, V, Cr, Fe, Cu, Zn, Ga, Sr, Zr, Nb, In, Sn, Ta, W, or the like. An example of preferable lithium-containing metal composite oxides is a composite oxide that contains at least one of the group consisting of Ni, Co, Mn, and Al.

Examples of the conductive agent contained in the second mixture layers 32 can include carbon materials, such as carbon black, acetylene black, Ketjenblack, and graphite. Example of the binding agent contained in the second mixture layers 32 can include fluorine resins such as polytetrafluoroethylene (PTFE) and polyvinylidene fluoride (PVdF), and a polyacrylonitrile (PAN), a polyimide resin, an acrylic resin, and a polyolefin resin. These resins may be used along with a cellulose derivative such as carboxymethylcellulose (CMC) or a salt thereof, polyethylene oxide (PEO), or the like.

The negative electrode 12 includes the first core 40, and the first mixture layers 42 formed on the opposite surfaces of the first core 40. The first core 40 may be made of metal foil that is stable in the potential range of the negative electrode 12, such as copper or a copper alloy, a film on which the metal is disposed as a surface layer, or the like. The first mixture layers 42 contains a negative-electrode active material, and a binding agent. The negative electrode 12 can be fabricated by forming the first mixture layers 42 on the opposite surfaces of the first core 40 through, for example, applying a negative electrode mixture slurry that contains the negative-electrode active material, the binding agent, and the like on the first core 40, drying the applied films, and then compressing them. Note that the first mixture layer 42 may be formed only on one surface of the first core 40. Alternatively, first mixture layers 42 having already been formed in a layered manner may be pasted to the first core 40. In such pasting, a conductive adhesive that contains conductive particles may be interposed between the first core 40 and the first mixture layers 42.

Typically, a carbon material that can absorb and desorb lithium ions is used as the negative-electrode active material. Preferable carbon materials include graphites that are natural graphites, such as flake graphite, lump graphite, and earthy graphite, and artificial graphites, such as artificial lump graphite, and graphitized mesophase carbon microbeads. The first mixture layer may contain, as the negative-electrode active material, an Si material that contains silicon (Si). Metal that is other than Si and is alloyed with lithium, an alloy that contains the metal, a compound that contains the metal, or the like may be used as the negative-electrode active material.

Similar to the case of the positive electrode 11, a fluorine resin, PAN, a polyimide resin, an acrylic resin, a polyolefin resin, or the like may be used as the binding agent contained in the first mixture layers 42. Preferably, styrene-butadiene rubber (SBR) or its derivative is used. The first mixture layers 42 may contain, for example, CMC or its salt, polyacrylic acid (PAA) or its salt, or polyvinyl alcohol, in addition to SBR or the like.

A porous sheet that has ion permeability and insulating property is used as the separator 13. Specific examples of the porous sheet include a microporous thin-film, a woven fabric, and a non-woven. Preferably, the material of the separators 13 is a polyolefin resin such as polyethylene or polypropylene, cellulose, or the like. The separator 13 may have either a single-layer structure or a laminate structure. A heat-resistant layer or the like may be formed on each of the surfaces of the separators 13.

As shown in FIG. 1, the battery 10 includes a metal lower current collector plate (negative electrode current collector plate) 18 that is made of copper, iron, nickel, a nickel alloy, or the like lower than the electrode assembly 14 in the axial direction. The lower current collector plate 18 constitutes a first energization member. In the present embodiment, a lower current collector plate 18 includes a disk-shaped base portion 18a, and a closed-bottom-cylindrical-shaped protruding portion 18b that is provided at the center of the base portion 18a and protrudes downward in the axial direction. In a state where the upper surface of the base portion 18a is pressed against the first exposed portion 41 that constitutes a lower end portion of the electrode assembly 14 in the axial direction, the lower surface of the base portion 18a is irradiated with laser light from below. By the laser welding, the first exposed portion 41 is joined to the upper surface of the base portion 18a. Furthermore, a bottom plate portion 18c disposed at the distal end of the protruding portion 18b is overlaid on the upper surface of the bottom plate portion 68 of the housing can 16, and subsequently, the bottom plate portion 68 is irradiated with the laser light from below. By the laser welding, the lower current collector plate 18 is joined to the bottom plate portion 68, thus being electrically coupled to the housing can 16.

The case where the first exposed portion 41 is electrically coupled to the housing can 16 via the lower current collector plate 18 has been described. However, the negative electrode may be electrically coupled to the housing can via one or more negative electrode leads that protrude from the lower end portion of the electrode assembly. Alternatively, in addition to or instead of the electrical coupling to the housing can via one or more negative electrode leads, the contact of the first exposed portion provided on the outermost periphery of the electrode assembly to the inner-peripheral surface of the housing can may electrically couple the negative electrode to the housing can. The first exposed portion 41 may be directly joined to the bottom plate portion of the housing can by laser or the like. The first exposed portion 41 may be joined to the lower current collector plate 18 in a state of being bent in the radial direction. Furthermore, in a state where parts of the first exposed portion 41 arranged in the radial direction are overlaid on each other, the first exposed portion 41 may be joined to the lower current collector plate 18.

The battery 10 includes an upper current collector plate 19 (positive electrode current collector plate) that is made of metal, such as aluminum or an aluminum alloy, on the upper side of the electrode assembly 14 in the axial direction. The upper current collector plate 19 constitutes a second energization member. The upper current collector plate 19 includes a base portion 19a electrically coupled to the positive electrode 11, and a through-hole 19b provided at the center of the base portion 19a. A spacer 37 that is made of an insulating member for preventing the upper current collector plate 19 and the housing can 16 from being coupled to each other is provided between the base portion 19a and the housing can 16. In a state where the lower surface of the base portion 19a is pressed against the third exposed portion 31 that constitutes the upper end portion of the electrode assembly 14, the upper surface of the base portion 19a is irradiated with laser light from above. By the laser welding, the third exposed portion 31 is joined to the lower surface of the base portion 19a.

Note that the distal end side of the third exposed portion 31 may be joined to the upper current collector plate 19 in a state of being bent in the radial direction. Furthermore, in a state where parts of the third exposed portion arranged in the radial direction are overlaid on each other, the third exposed portion may be joined to the upper current collector plate 19. A lead coupled to the positive electrode 11 may be joined to the upper surface of the base portion 19a through the through-hole 19b.

The sealing assembly 17 is made up of a terminal cap 27. The terminal cap 27 is made of metal. The terminal cap 27 includes a disk-shaped base portion 27a, and a projection 27b. The projection 27b includes, for example, a cylindrical protrusion. The base portion 27a of the terminal cap 27 may be coupled to the upper surface of the base portion 19a of the upper current collector plate 19 through a strip-shaped lead 55. The method of coupling the lead 55 to the base portion 27a and the base portion 19a may be welding. For example, the terminal cap 27 and the upper current collector plate 19 are electrically coupled to each other by laser welding.

Typically, the housing can 16 is made of metal that contains iron as a principal component, and is made of, for example, a material of nickel-plated iron. The housing can 16 may be made of metal that contains aluminum or the like as a principal component. The housing can 16 contains a cylindrical portion 65 and a bottom plate portion 68. The cylindrical portion 65 includes a ring-shaped groove portion 35, and a ring-shaped shoulder portion 38. The groove portion 35 is formed by applying a spinning process to part of the cylindrical portion 65, and forming a recess inward in the radial direction along the entire periphery in the circumferential direction. The shoulder portion 38 is formed when the upper end portion of the cylindrical portion 65 is bent inward in the radial direction and is crimped to the peripheral portion 48 of the sealing assembly 17, and extends inward in the radial direction at the upper end portion of the cylindrical portion 65.

The peripheral portion 48 of the terminal cap 27 is clamped between the shoulder portion 38 and the groove portion 35 via a gasket 28, thereby allowing the sealing assembly 17 to be fixed to the housing can 16. The gasket 28 has a role of a sealing material for maintaining the airtightness in the battery, and a role as an insulating material that insulates the housing can 16 and the sealing assembly 17 from each other. The gasket 28 is made of, for example, polyolefin. The groove portion 35 is formed at a position apart from the upper end of the housing can 16 by a predetermined length. The predetermined length corresponds to, for example, a length that is greater than or equal to 1% and less than or equal to 20% of the length of the housing can 16 in the axial direction. The gasket 28 is compressed by the shoulder portion 38. The gasket 28 includes a protruding portion 28a that protrudes inward in the radial direction from between the shoulder portion 38 and the sealing assembly 17.

A thin-wall fragile portion 69 is formed in the bottom plate portion 68. The fragile portion 69 is provided by, for example, forming a circular or C-shaped engraved mark on the lower surface of the bottom plate portion 68. When the battery 10 abnormally generates heat and the internal pressure of the battery 10 increases to a predetermined pressure, the fragile portion 69 fractures, and gas is discharged from the bottom plate portion 68. The discharge of the gas prevents the internal pressure of the battery 10 from excessively increasing to explode the battery 10, and the safety of the battery 10 increases.

The battery 10 further comprises a circular-ring-shaped metal plate 80, and a ring-shaped insulating plate 82 made of an insulating material. The metal plate 80 includes a radial-direction extending portion that extends in a substantially radial direction. The radial-direction extending portion is joined to the upper surface of the shoulder portion 38. The terminal cap 27 to which the third exposed portion 31 is electrically coupled via the upper current collector plate 19 serves as a positive electrode terminal. The metal plate 80 to which the first exposed portion 41 is electrically coupled via the lower current collector plate 18 and the housing can 16 serves as a negative electrode terminal. The metal plate 80 is electrically coupled to, for example, a current collector plate (not shown) that electrically couples a plurality of batteries 10 in series or parallel using a tongue portion (lead) of the current collector plate. By such a configuration, the plurality of cylindrical batteries 10 can be easily electrically coupled to the current collector plate.

The insulating plate 82 is interposed between the metal plate 80 and the sealing assembly 17, and insulates the metal plate 80 from the sealing assembly 17. An outer peripheral edge portion of the insulating plate 82 on the outer side in the radial direction may be positioned on the upper side of the protruding portion 28a of the gasket 28, and be in contact with the gasket 28. By such a configuration, the gasket 28 and the insulating plate 82 insulate the metal plate 80 from the sealing assembly 17. The periphery of a hollow portion of the insulating plate 82 includes a cylindrical portion 83 that covers the outer-peripheral surface of the projection 27b of the terminal cap 27. The cylindrical portion 83 is joined to an end portion of a plate-shaped base portion of the insulating plate 82 on the inner side in the radial direction. Note that the battery does not necessarily include the metal plate and the insulating plate.

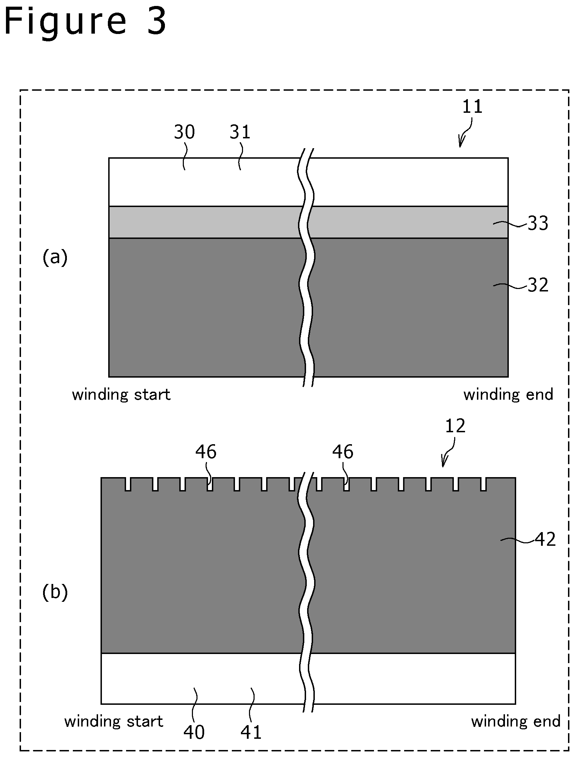

FIG. 3(a) is a schematic plan view when the positive electrode 11 is developed in a strip shape, and FIG. 3(b) is a schematic plan view when the negative electrode 12 is developed in a strip shape. As shown in FIG. 3(a), the positive electrode 11 includes resin layers 33 where an insulative resin, such as polyvinylidene fluoride (PVdF), is disposed on the second core 30 on both the winding outer surface and the winding inner surface. The resin layers 33 are provided for preventing the positive electrode 11 and the negative electrode 12 from being short-circuited. The resin layers 33 are provided on the opposite surfaces of the positive electrode 11 from the starting end to the terminating end in the winding direction. The resin layer 33 is disposed between the third exposed portion 31 and the second mixture layer 32 with respect to the positive electrode width direction.

As shown in FIG. 3(b), the negative electrode 12 includes a plurality of notches 46 in an upper end portion (second end). In the present embodiment, each notch 46 has a rectangular slit shape. The notch may have any shape, for example, a square shape, an isosceles triangle shape, a semicircle shape, or the like. The notches 46 can be provided, for example, by cutting parts of the upper end portion of the negative electrode 12 using laser light or a rotary blade. The notches 46 are disposed at intervals in the first longitudinal direction (negative electrode longitudinal direction), and are disposed at substantially equal intervals in the first longitudinal direction in the present embodiment. As shown in FIG. 2, the notches 46 are provided above the second mixture layers 32 in the axial direction. Even with the notches 46 provided in such a manner, degradation is prevented. Note that the notches 46 may be provided in an area that is on the negative electrode 12 and faces the second mixture layers 32.

Next, working effects that can be achieved by providing the notches 46 for the negative electrode 12 are described. When the battery 10 is charged and discharged many times, the positive electrode 11 and the negative electrode 12 are sometimes elongated in the axial direction (electrode assembly height direction). The expansion and contraction during charging and discharging occur at the negative electrode 12. The negative electrode 12 expands in the radial direction and the axial direction during charging. It is assumed that the elongation of the negative electrode 12 in the axial direction is caused by the expansion of the negative electrode during charging.

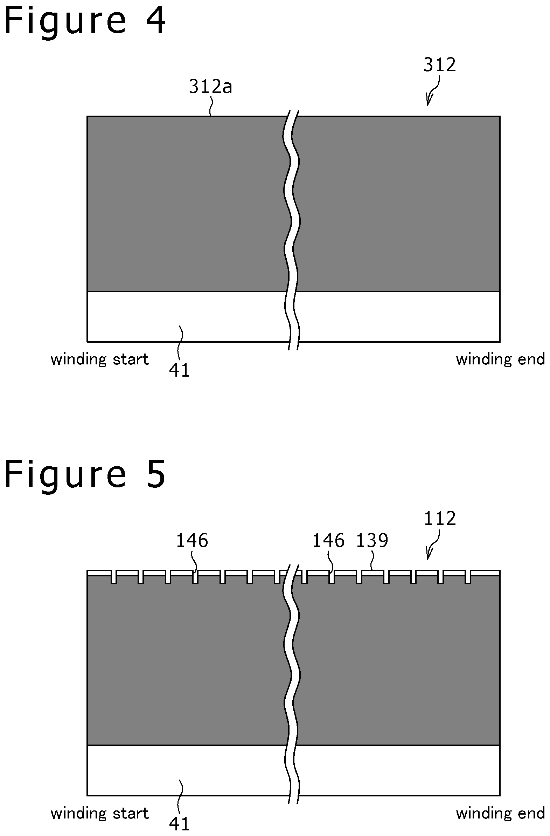

Under such a background, as shown in FIG. 4, i.e., a schematic plan view of a negative electrode in a reference example corresponding to FIG. 3(b), with a negative electrode 312 having a simple rectangular shape, there is a possibility that as the negative electrode 312 expands in the negative electrode width direction, the separators 13 that insulate the positive electrode 11 and the negative electrode 12 from each other are damaged by the upper end portion (edge) 312a of the negative electrode 312. Due to the damage of the separators 13, the negative electrode 312 possibly comes into contact with the third exposed portion 31, or possibly comes into contact with a lead in a case where current is collected from the positive electrode 11 to an energization member (second energization member) via the lead.

In contrast, according to the battery 10 in the present disclosure, the negative electrode 12 has the notches 46 disposed at the upper end portion at intervals in the negative electrode longitudinal direction (first longitudinal direction). The notches 46 reduce the stiffness of the upper end portion (edge) of the negative electrode 12. Consequently, even if the negative electrode 12 is elongated in the axial direction, and the edge of the negative electrode 12 presses the separators 13, the edge of the negative electrode 12 tends to be bent by the force received from the separators 13, and the separators 13 are prevented from being damaged. Consequently, the positive electrode 11 and the negative electrode 12 are prevented from coming into contact with each other, and the reliability of the battery 10 can be increased.

Note that the present disclosure is not limited to the embodiment described above and their modified examples. Various changes and modifications can be made in the range of description in the claims of the present application and its equivalent range.

For example, with the aforementioned embodiment, the case where the entire upper end portion of the negative electrode 12 is included in the first mixture layers 42, and the first mixture layers 42 are provided with the notches 46 has been described. However, as shown in FIG. 5, the negative electrode 112 may include a second exposed portion 139 that extends in the first longitudinal direction at the upper end portion. At least some of the notches 146 may be provided in the second exposed portion 139. According to such a configuration, the stiffness of the upper end portion (edge) of the negative electrode 112 can be further reduced. Consequently, the separators 13 can be further prevented from being damaged by the edge of the negative electrode 112.

With the aforementioned embodiment, the case where the notches 46 are disposed at intervals over the entire range between the opposite ends in the first longitudinal direction has been described. One or more notches are not necessarily provided over the entire region between the opposite ends in the first longitudinal direction, and may be provided locally with respect to the first longitudinal direction.

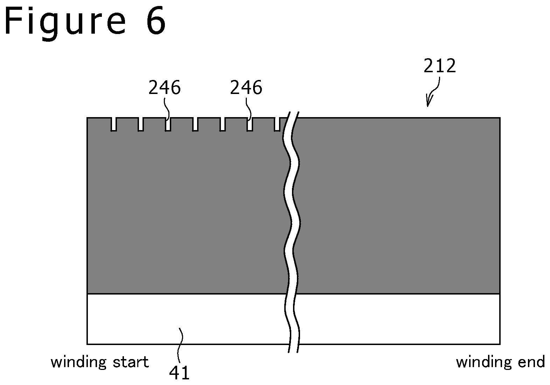

For example, with certain specifications, the elongations of the positive electrode and the negative electrode in the axial direction are significant on the winding start side of the electrode assembly in the winding direction in some cases. In such cases, as shown in FIG. 6, one or more notches 246 may be provided only on the winding start side in the winding direction at the upper end portion of the negative electrode 212. Such a configuration can effectively prevent the separators 13 from being damaged with a small number of notches 246.

The case where the third exposed portion 31 provided in the upper end portion (fourth end) of the positive electrode 11 is joined to the sealing assembly 17 has been described. However, the positive electrode may be joined to the sealing assembly using one or more positive electrode leads. One or more notches may be locally provided around an area that is at the upper end portion (second end) of the negative electrode and faces one or more positive electrode leads in the radial direction via the separator. In this case, at least some of the notches are provided at positions of overlapping the positive electrode lead in the radial direction via the separator, which can effectively prevent the negative electrode and the positive electrode lead from coming into contact with each other.

The case where the first electrode is the negative electrode has been described. However, the positive electrode is sometimes elongated in the electrode assembly height direction (axial direction) by the following phenomenon. In detail, the expansion and contraction during charging and discharging occur at the negative electrode, and the negative electrode expands in the radial direction and the axial direction during charging. During charging, due to the expansion of the negative electrode in the radial direction, the face pressure in the radial direction in the electrode assembly increases. Consequently, the positive electrode is pulled in the electrode assembly height direction by the expansion of the negative electrode in the axial direction, and the positive electrode tends to be elongated in the axial direction.

On the other hand, during discharging, the face pressure in the radial direction in the electrode assembly decreases due to the contraction of the negative electrode in the radial direction. Accordingly, the positive electrode is not pulled back by the contraction of the negative electrode in the electrode assembly height direction. As a result, when charging and discharging are repeated many times, the positive electrode is elongated in the electrode assembly height direction. In consideration of this phenomenon, one or more notches may be provided at the lower end portion (third end) of the positive electrode in the axial direction. In this case, the contact between the positive electrode and the lower end portion (first end) of the negative electrode due to the elongation of the positive electrode in the axial direction can be prevented. The invention in the present disclosure has been described assuming that the first electrode is the negative electrode. Alternatively, first electrode may be the positive electrode.

The structure of the sealing assembly is not limited to the structure in the embodiment. The sealing assembly may have a laminate structure that includes two rupture plates (a lower vent member and an upper vent member). A convex terminal cap that covers the rupture plates may be present. Alternatively, the sealing assembly may only include the rupture plates, or have a structure where an internal terminal plate, a ring-shaped insulating plate, and a rupture plate are sequentially stacked from the electrode assembly side. The bottom plate portion of the housing can does not necessarily include a thin-wall fragile portion. Note that the first electrode (e.g., the negative electrode) is not necessarily coupled to the housing can at the first end side. A through-hole may be formed in the bottom plate portion of the housing can. The first electrode may be coupled to the terminal that is inserted in the through-hole. As described above, the first electrode may be coupled to the first energization member.

The power storage device in the present disclosure may have the following configurations.

Configuration 1: A power storage device, comprising: an electrode assembly that includes a first electrode and a second electrode, and a separator interposed therebetween; and a housing body that accommodates the electrode assembly, wherein the first electrode includes a first end and a second end in a first direction, and the first electrode allows current to be collected from a side of the first end, and includes one or more notches at the second end.

Configuration 2: The power storage device according to claim 1, wherein the first electrode, the second electrode, and the separator each have a strip shape, and the electrode assembly is a coiled electrode assembly in which the first electrode and the second electrode are wound with the separator being interposed therebetween.

Configuration 3: The power storage device according to claim 1 or 2, wherein the one or more notches extend in the first direction.

Configuration 4: The power storage device according to any one of claims 1 to 3, wherein the one or more notches are a plurality of notches, and at the second end, the plurality of notches are formed at intervals in a first longitudinal direction of the first electrode.

Configuration 5: The power storage device according to any one of claims 2 to 4, wherein the first electrode includes a strip-shaped first core, and a first mixture layer disposed on the first core, and the second electrode includes a strip-shaped second core, and a second mixture layer disposed on the second core.

Configuration 6: The power storage device according to any one of claims 2 to 5, further comprising a first energization member electrically connected to the first electrode, wherein a first exposed portion where the first mixture layer extending in a first longitudinal direction of the first electrode is not formed, and the first core is exposed is formed at the first end, and the first energization member and the first exposed portion are joined to each other.

Configuration 7: The power storage device according to any one of claims 2 to 6, wherein a second exposed portion where the first mixture layer extending in the first longitudinal direction of the first electrode is not formed, and the first core is exposed is formed at the second end, and at least one or some of the one or more notches are formed in the second exposed portion.

Configuration 8: The power storage device according to any one of claims 2 to 7, further comprising a second energization member electrically connected to the second electrode, wherein in the first direction, the second electrode includes a third end disposed on a side of the first end, and a fourth end disposed on a side of the second end, and a third exposed portion where the second mixture layer extending in a second longitudinal direction of the second electrode is not formed, and the second core is exposed is formed at the fourth end, and the second energization member and the third exposed portion are joined to each other.

### REFERENCE SIGNS LIST

10 Battery (power storage device), 11 Positive electrode (second electrode), 12, 112, 212 Negative electrode (first electrode), 13 Separator, 14 Electrode assembly, 16 Housing can (housing body), 17 Sealing assembly, 18 Lower current collector plate, 18a Base portion, 18b Protruding portion, 19 Upper current collector plate, 19a Base portion, 19b through-hole, 27 Terminal cap, 27a Base portion, 27b Projection, 28 Gasket, 28a Protruding portion, 30 Second core, 31 Third exposed portion, 32 Second mixture layer, 33 Resin layer, 35 Groove portion, 37 Spacer, 38 Shoulder portion, 40 First core, 41 First exposed portion, 42 First mixture layer, 46, 146, 246 Notch, 48 Peripheral edge portion, 55 Strip-shaped lead, 65 Cylindrical portion, 68 Bottom plate portion, 69 Fragile portion, 80 Metal plate, 82 Insulating plate, 83 Cylindrical portion, 139 Second exposed portion.

## Claims

1. A power storage device, comprising:
an electrode assembly that includes a first electrode and a second electrode, and a separator interposed therebetween; and
a housing body that accommodates the electrode assembly,
wherein the first electrode includes a first end and a second end in a first direction, and
the first electrode allows current to be collected from a side of the first end, and includes one or more notches at the second end.

2. The power storage device according to claim 1, wherein
the first electrode, the second electrode, and the separator are each strip-shaped, and
the electrode assembly is a coiled electrode assembly in which the first electrode and the second electrode are wound with the separator being interposed therebetween.

3. The power storage device according to claim 1, wherein the one or more notches extend in the first direction.

4. The power storage device according to claim 2, wherein
the one or more notches are a plurality of notches, and
at the second end, the plurality of notches are formed at intervals in a first longitudinal direction of the first electrode.

5. The power storage device according to any one of claims 2 to 4, wherein
the first electrode includes a strip-shaped first core, and a first mixture layer disposed on the first core, and
the second electrode includes a strip-shaped second core, and a second mixture layer disposed on the second core.

6. The power storage device according to any one of claims 2 to 4, further comprising
a first energization member electrically connected to the first electrode, wherein
a first exposed portion where the first mixture layer extending in a first longitudinal direction of the first electrode is not formed, and the first core is exposed is formed at the first end, and
the first energization member and the first exposed portion are joined to each other.

7. The power storage device according to any one of claims 2 to 4, wherein
a second exposed portion where the first mixture layer extending in the first longitudinal direction of the first electrode is not formed, and the first core is exposed is formed at the second end, and
at least one or some of the one or more notches are formed in the second exposed portion.

8. The power storage device according to any one of claims 2 to 4, further comprising
a second energization member electrically connected to the second electrode,
wherein
in the first direction, the second electrode includes a third end disposed on the side of the first end, and a fourth end disposed on a side of the second end, and a third exposed portion where the second mixture layer extending in a second longitudinal direction of the second electrode is not formed, and the second core is exposed is formed at the fourth end, and
the second energization member and the third exposed portion are joined to each other.
